# EUROPEAN PATENT APPLICATION

(11) **EP 2 284 591 A1**
(43) Date of publication of application: **16.02.2011**
(21) Application number: 10172707.1
(22) Date of filing: 12.08.2010
(51) Int. Cl.: G02B 17/06, G02B 7/182

(54) **Preferably miniaturized optical transfer device**

(30) Priority: 13.08.2009 IT TO20090640
(71) Applicant: SELEX Galileo S.p.A., Campi Bisenzio (IT)
(72) Inventor: Paolinetti, Riccardo, I-50142 Firenze (IT); Calcagni, Claudio, I-50145 Firenze (IT); Capanni, Annalisa, I-59100 Prato (IT); Battistelli, Enrico, I-50125 Firenze (IT)
(74) Representative: Jorio, Paolo

(57) **Abstract**

An optical transfer device (1) comprises at least three mirrors (3,4,5), two of which co-operating with one another for modifying the wave front of an electromagnetic radiation, wherein at least two of said mirrors are made monolithically on a single support (35,21).

## Description

The present invention relates to a preferably miniaturized optical device for space or terrestrial applications.

In space applications, such as for example in missions for carrying out exploration on the planet Mars, optical devices are used, for example for conducting stratigraphic analyses of the subsoil. A device suitable for conducting such analyses and for being sent to the planet must be both compact in order to increase the exploitation of the transport compartment in the spaceship and integrated in such a way that the stratigraphic analyses can be easily and completely automated and remotely controlled.

In terrestrial applications, an optical transfer device can be used for carrying out both stratigraphic analyses and more in general spectrometric analyses in numerous sites. In particular, it is possible to envisage applications in spectrometric stratigraphic analysis for seeking hydrocarbons or else for verifying the presence in the subsoil of harmful minerals, such as asbestos, during preliminary excavations of major works, for example of road or railway tunnels. Alternatively, it is possible to apply optical heads for spectrometric analysis of waters and/or of waste dumps for verifying, especially in the latter case, whether toxic materials are present unduly accumulated even after the dump has been closed and covered over.

For terrestrial applications an important requisite is the miniaturization of the devices, which enables integration in drilling probes or tools in such a way that the interventions will not be overly invasive. Consequently, it is possible to reduce both the costs and the environmental impact of the interventions of analysis and verification. It is moreover important for the components that convey the optical wave front to be assemblable in a particularly precise way so as to reduce aberrations.

The aim of the present invention is to provide an optical transfer device that is able to meet at least partially the requirements specified above.

The aim of the present invention is achieved via an optical transfer device according to Claim 1.

The invention will now be described with reference to the annexed drawings, which illustrate non-limiting examples of embodiment thereof and wherein:
- Figures 1 to 3 are respective optical diagrams implemented in an optical head according to the present invention;
- Figures 4 and 5 are perspective views of two components of an optical head according to the present invention; and
- Figure 6 is a perspective view of the two components of Figures 4 and 5 in an assembled condition.

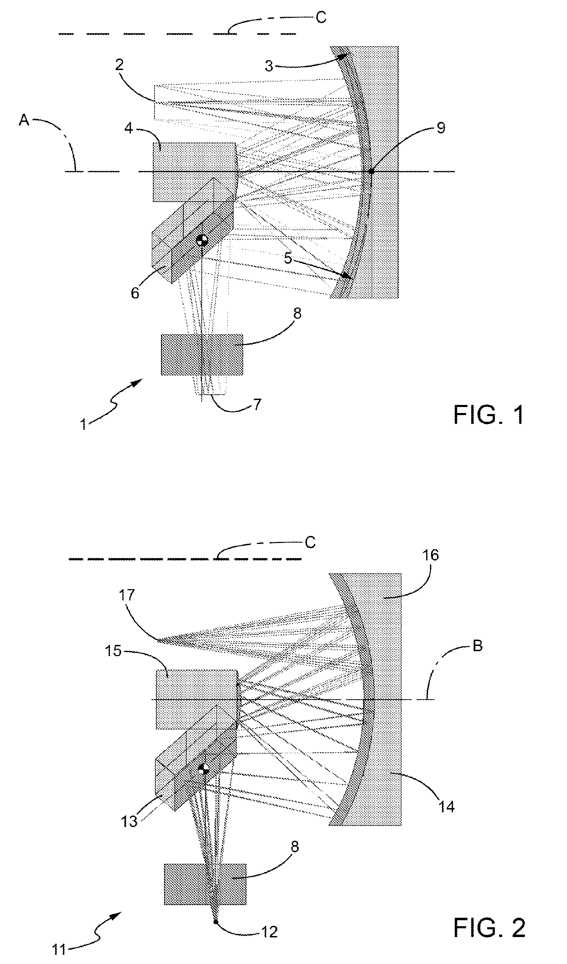

Illustrated in Figure 1 is the diagram of an optical circuit designed to be provided in an optical transfer device mounted within a drilling tool, for example a drilling head.

In particular, the optical device defines an optical illumination path that receives a beam of rays having a frequency preferably but not exclusively in the visible and the near infrared, and an optical reception path that returns a signal suitable for being processed, for example, by a spectrometer (not illustrated) for carrying out a stratigraphic analysis.

Each optical path defines a pair of conjugate points, in particular, an optical fibre that guides the beam of light rays is located on an object point of the illumination path and an image point is located external to the drilling tool. Accordingly, the object point of the reception path is located outside the drilling tool and preferably in the proximity of the image point of the illumination circuit, and the image point of the reception path is located inside the drilling tool and is collected by a second optical fibre connected to the spectrometer.

Figure 1 illustrates the diagram of the optical illumination path 1, which defines an object point 2 illuminated preferably but not exclusively via an optical fibre (not illustrated), a concave primary half-mirror 3, a convex secondary mirror 4, a primary half-mirror 5, set in series to the secondary mirror 4, and a deviation mirror 6, arranged for projecting an image point 7 beyond a window 8 preferably made of sapphire glass.

In particular, starting from the object point 2, the primary half-mirror 3, the secondary mirror 4, the primary half-mirror 5, and the deviation mirror 6 are set in series, and an optical axis A of the primary half-mirror 3 coincides with that of the secondary mirror 4.

The optical axis A intersects the primary half-mirror 3 in a point 9, referred to as "vertex", and the distance in a direction parallel to the optical axis A, referred to as "arm" of the image point 7, in combination with the magnification, depends upon the arm of the object point 2 and upon the primary half-mirror 5.

In particular, in order to obtain an optical path in a particularly compact device, i.e., having mirrors set close to one another, and at the same time to keep both magnifications close to, and preferably less than, unity and a relatively high arm of the image point 7 in order to be able to illuminate a point outside the drilling tool, the primary half-mirror 5 is a concave mirror and has a radius of curvature less, in absolute value, than that of the primary half-mirror 3. Furthermore, the secondary mirror 4 has an absolute value of the radius of curvature less both than that of the primary half-mirror 3 and than that of the primary half-mirror 5.

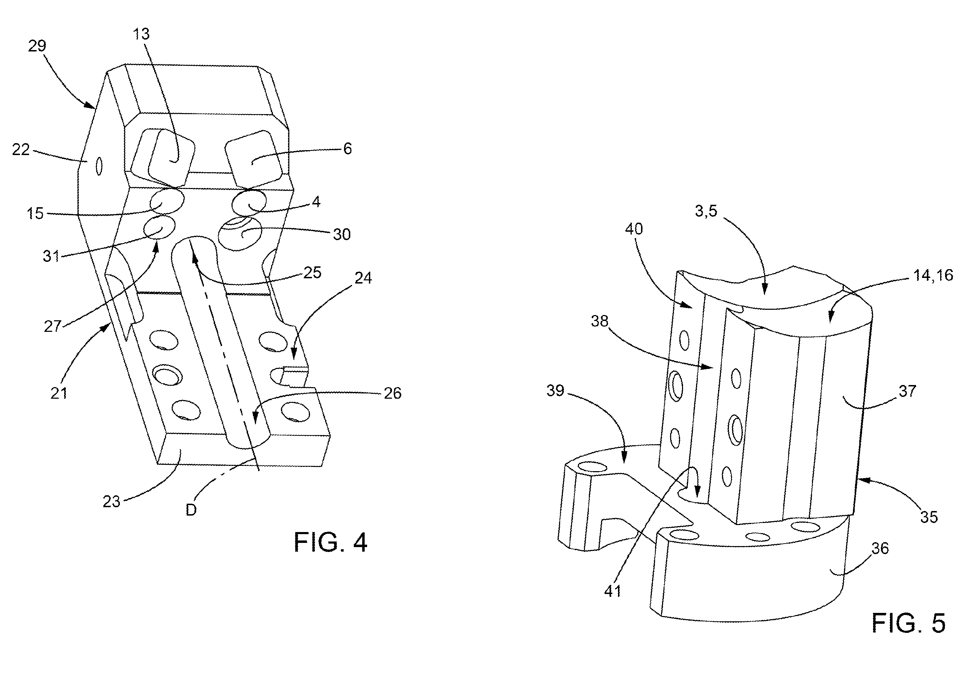

According to a preferred embodiment of the present invention, the primary half-mirror 3 and the primary half-mirror 5 are made on one and the same support 10 (Figure 5) and both have a constant radius of curvature. The mirrors are consequently portions of a spherical surface and have a tangent plane in common passing through the vertex 9. Furthermore, the area of interface between the primary half-mirror 3 and the primary half-mirror 5 presents an appropriate radiusing to reduce to a minimum phenomena of diffusion of the light beam when the rays are reflected.

The deviation element 6 modifies the spatial position of the image point 7, in the example illustrated in such a way that the distance of the image point 7 from the optical axis A is greater than that of the object point 2. Preferably, the image point 7 is located outside or else on the outer surface of the window 8 when a plane perpendicular to the optical axis A and containing the image point 7 is considered. The window 8 has a negligible contribution of chromatic aberration and is envisaged in applications where contaminating agents may damage the device that forms the optical path 1. In particular, the deviation mirror 6 is plane and performs the function of deviating the light through the window 8, which is supported by a side wall of the drilling tool.

Figure 2 is a schematic illustration of a reception path 11 having an object point 12 close to the image point 7 outside the drilling tool, and comprising, in series starting from the object point 12, an active optical element 13, a concave primary half-mirror 14, and a convex secondary mirror 15. The primary half-mirror 14 and the secondary mirror 15 are preferably spherical and have one and the same optical axis B parallel to the optical axis A of the illumination path 1. In the present description and in the claims the expression "active optical element" refers to a mirror having a curvature such as to modify the shape of the wave front of the reflected radiation.

In particular, the secondary mirror 15 has an absolute value of the radius of curvature less than that of the primary half-mirror 14. Furthermore, both the primary half-mirror 14 and the secondary mirror 15 are preferably spherical, and the rays reflected by the secondary mirror 15 are collected by a primary half-mirror 16 that defines an image point 17 set in which is preferably but not exclusively one end of an optical fibre (not illustrated) for collecting the signal and guiding it towards a processing device, for example a spectrometer. The primary half-mirror 16 has the same radius of curvature and the same optical axis B as the primary half-mirror 14.

Preferably, both the optical illumination path 1 and the reception path 11 are obtained via mirrors so as not to present any chromatic aberration, i.e., so as to enable use on the optical paths of rays having different frequencies with negligible impact on the precision of the positioning of the image point as a function of the frequency of the incident rays.

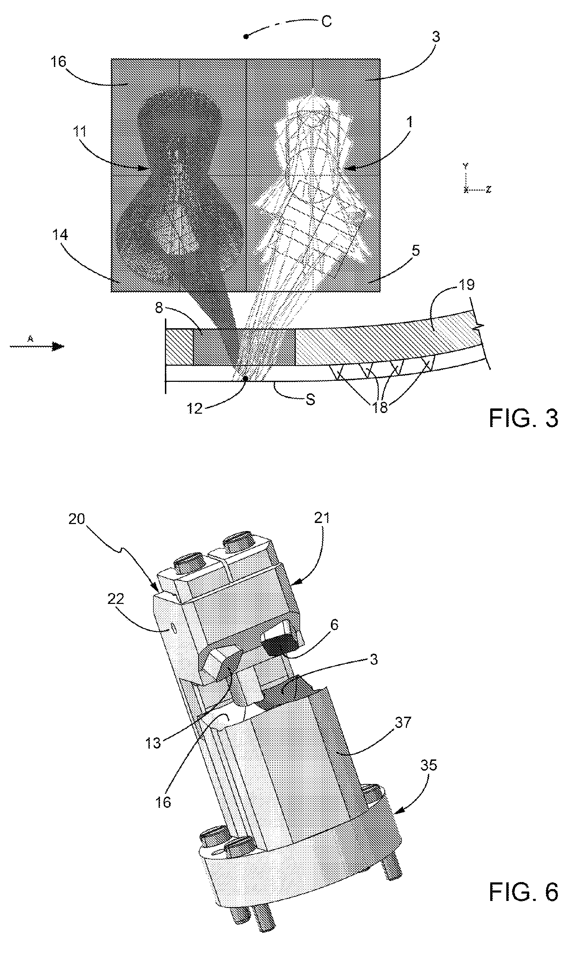

Figure 3 is a schematic illustration of the envelope of the paths of the light rays along the optical paths 1 and 11. In particular, the illumination path 1 is coupled to an optical fibre having a diameter larger than that of the optical fibre coupled to the reception path 11 so as to define an illuminated area having a size greater than the area detected by the object point of the reception path. Furthermore, in order to concentrate more the energy so as to illuminate the area that surrounds the object point 12, the magnification ratio of the illumination path is less than unity, i.e., the lighting rays are concentrated in the area surrounding the object point 12. Preferably, the position of the object point 12 lies on an internal surface S of the hole made as the drilling tool advances in a soil to be analysed. In particular, the drilling tool has an axis of rotation C preferably set at a distance from the optical axes A, B. Theoretically, the surface S coincides with the cylindrical surface identified by the maximum diameter of cutting elements 18 of the drilling tool, the external casing of which is designated by the number 19 and is illustrated schematically once again in Figure 3.

Figures 4, 5 and 6 illustrate an optical transfer device 20 incorporating the optical paths 1 and 11 and two components of the latter.

In particular, the mirrors 3, 4, 5, 6, 13, 14, 15, 16 are made in a monolithic way on a corresponding support, i.e., a block is machined directly with removal of stock, for example with removal of chips using a single-point diamond machine, in order to shape and obtain the surfaces ready for use of the mirrors described above on board a single machine. In this way, the position of the mirrors is fixed and precise when the supports are connected to one another and this maintains, in spite of the small dimensions, a high fidelity of the images that can be analysed with the optical device. Furthermore, each support can be made of materials having coefficients of thermal expansion that are substantially equal or else of a combination of materials having coefficients of thermal expansion that are different but are able to compensate one another in such a way that the optical device 20 has as a whole a thermal expansion in the three orthogonal directions that is uniform and is such as to have a minimal impact on the relative position of the mirrors.

Figure 4 shows a monolithic body 21 made preferably of aluminium and defining the deviation element 6, the primary half-mirror 16, and the secondary mirrors 4, 15. The monolithic body 21 comprises a head 22 and a reference wall 23 defining a plane surface 24, with respect to which the head 22 juts out. The monolithic body 21 defines a hole 25 that traverses the head 22 and has an axis D parallel to the plane surface 24. In particular, the hole 25 proceeds also along the reference wall 23, on which it defines a rectilinear impression 26 having a cross section shaped like an arc of circumference.

The head 22 has a substantially parallelepipedal overall shape and defines a surface 27 perpendicular to the axis D and adjacent to the plane surface 24, a recess 28 delimited by rectilinear surfaces having generatrices perpendicular to the axis D, and a plane surface 29 opposed to the surface 27 with respect to the recess 28.

The convex surfaces that define the secondary mirrors 4, 15 jut out with respect to the surface 27. Two elements defining the deviation element 6 and the primary half-mirror 16 protrude within the recess 28.

The head 22 moreover defines a first through hole 30 and a second through hole 31 having respective axes parallel to the axis D and lying on the object point 2 and image point 17. The optical axes A, B, the respective centres about which the surfaces that define the deviation element 6 and the primary half-mirror 16 are rotated in space, and the axes of the holes 30, 31 lie in respective preferably mutually parallel planes.

Figure 5 illustrates a base 35 comprising a fixing flange 36 and a support 37 coming out perpendicularly from the flange 36 and having a substantially rectangular cross section. The support 37 has a rectilinear impression 38, which is perpendicular to the flange 36 and has a cross section shaped like an arc of circumference. Furthermore, the flange 36 delimits a face 39 jutting out with respect to a plane surface 40 of the support 37 on which the impression 38 is made. The flange 36 moreover defines a through hole 41 coaxial with the impression 38.

On the opposite longitudinal side of the flange 36, the support 37 defines the primary half-mirror 3, the active optical element 6, the primary half-mirror 14, and the primary half-mirror 16. Figure 6 illustrates the monolithic assembly 21 and the base 35 in a condition where they are assembled together. In particular, the plane surfaces 24 and 40 define a calibrated reference means that defines the relative position between the mirrors in three degrees of freedom. Furthermore, the rectilinear impressions 25 and 38 can be coupled to a pin (not illustrated) configured in such a way as to block the remaining three degrees of freedom. In particular, two degrees of freedom are blocked on account of the shape fit between the pin, the hole 25, the hole 41, and the rectilinear impressions 25 and 38. The remaining degree of freedom, i.e., the one regarding translation parallel to the axes A, B, D is blocked thanks to appropriate fixing screws between the reference wall 24 and the support 37. The reference means for defining in a precise way the relative position of the monolithic body 21 on the base 35 is defined by the contrast between the face 39 and a free end portion of the reference wall 23.

The ensemble of the monolithic body 21 and the base 35 defines a particularly compact optical device having a major dimension, i.e., the dimension measured along the axis D, of less than 40 mm.

The advantages of the optical transfer device 20 described and illustrated herein are presented in what follows.

When they are made monolithically on one and the same support, the mirrors of the optical paths 1, 11 are positioned with respect to one another with maximum precision. In fact, the optical axes are defined by the geometry of the surfaces that are machined in succession on one and the same support, defined by the head 21 and by the base 35. Preferably, the mirrors 3, 4, 5, 6, 13, 14, 15, 16 are made in succession on a machine with removal of chips on which the semi-finished product is blocked and subsequently released only after all the mirrors have been prepared. In this way, the errors of alignment can be reduced to a minimum because it is not necessary to mount the individual mirrors and then adjust the relative position thereof.

Furthermore, the conformation of the supports 21, 35 is such that the mirrors can be made on a high-precision machine, such as a single-point diamond machine, without the mirrors being taken down from the clinching device of the diamond machine that fixes the position of the semi-finished product during machining with removal of chips. In particular, the shape of the semi-finished product must not present undercuts or other shapes that prevent the tool from accessing the surface to be machined. For instance, a suitable shape is the convex one of the support, in particular the one illustrated for the base 35. The monolithic body 21 has a convex portion, which protrudes from the reference wall 24.

The various arms enable application of the transfer device within a tool so as to integrate in a probe/tool also a detector for carrying out spectrographic analysis.

The use of mirrors enables optical transfer with high degrees of precision of very wide wave spectra, ranging the ultraviolet to the infrared.

Furthermore, the formation on supports made of a single material enables reduction to a minimum of the distortion of the mirrors due to thermal expansion. In particular, thermal expansion is homogeneous, and this enables at least partial compensation of the contributions in such a way that the distances between the mirrors are kept within very restricted ranges as the temperature varies.

Each support is moreover mounted in a precise way notwithstanding the small dimensions via rigid shape-fit couplings, preferably via pin couplings.

Finally, it is clear that modifications or variations may be made to the optical transfer device 20 described and illustrated herein, without thereby departing from the sphere of protection, as defined in the annexed claims.

Depending upon the applications, the sapphire-glass window 18 can be removed, for example if it is necessary to inspect tubes, or more in general if the environment to be inspected does not have any contaminating agents.

Furthermore, it is possible for only one of the two paths to be provided in the optical transfer device 20 depending upon the purposes of use.

The ratios between the radii of curvature can be different from the ones described. Spherical surfaces are simpler to produce. In any case, the surfaces of the mirrors and of the active optical elements are surfaces of rotation generated by conics. Each conic is defined by an equation that, in canonical form, has a plurality of coefficients and a constant term. The mirrors that form the reception path 1 and the illumination path 11 are different from one another in such a way that at least one between the coefficients and the constant term of the equations in canonical form is different so as to define a difference between the arms of the conjugate points for each optical path. In other words, the surfaces of the mirrors may be either spherical surfaces or aspherical surfaces different from one another (obtained by rotation of a conic about one or more axes).

The magnification ratio both of the reception path 1 and of the illumination path 11 may be varied, depending upon the applications, around unity, preferably between 0.5 and 2, even more preferably between 0.7 and 1.5.

## Claims

1. An optical transfer device (20) comprising at least three mirrors (3, 4, 5), two of which co-operating with one another for modifying the wave front of an electromagnetic radiation, said device being **characterized in that** at least two of said mirrors are made monolithically on a single support (35, 21).

2. The optical transfer device according to Claim 2, **characterized in that** said three mirrors comprise at least one concave mirror (3) and one convex mirror (4) and **in that** said third mirror (5) is made monolithically with said convex mirror (4).

3. The optical transfer device according to any one of the preceding claims, **characterized in that** said supports (35, 21) can be rigidly connected via a shape fit.

4. The optical transfer device according to Claim 3, **characterized in that** said supports (35, 21) are made of one and the same material.

5. The optical transfer device according to any one of the preceding claims, **characterized in that** it comprises an optical reception path (11) and an optical illumination path (1), at least one of which comprises said three mirrors (3, 4, 5).

6. The optical transfer device according to Claim 5, **characterized in that** at least one between said optical illumination path (1) and said optical reception path (11) has a magnification ratio comprised between 0.5 and 2.

7. An assembly comprising a casing (19) and a transfer device according to any one of the preceding claims, wherein one conjugate point is located inside said casing (19) and the other conjugate point is located outside said casing (19).
